# EUROPEAN PATENT SPECIFICATION

(11) **EP 4 605 171 B1**
(45) Date of publication and mention of the grant of the patent: **24.12.2025**
(21) Application number: 23789539.6
(22) Date of filing: 10.10.2023
(51) Int. Cl.: B23K 26/08, B23K 37/02, B23Q 1/01

(54) **BRIDGE FOR A LASER PROCESSING MACHINE**
BRÜCKE FÜR EINE LASERBEARBEITUNGSMASCHINE
PORTIQUE POUR UNE MACHINE D'USINAGE AU LASER

(30) Priority: 20.10.2022 EP 22202849
(43) Date of publication of application: 27.08.2025
(73) Proprietor: Bystronic Laser AG, 3362 Niederönz (CH)
(72) Inventor: KÄHR, Christian, 5034 Suhr (CH); SCHMUTZ, Peter, 3373 Heimenhausen (CH); BÜRGI, Fabian, 3185 Schmitten (CH)
(74) Representative: Fink Numrich Patentanwälte PartmbB
(86) International application number: PCT/EP2023/077964
(87) International publication number: WO 2024/083561

(56) References cited:
- EP-A1- 3 023 190
- CN-A- 108 453 518

## Description

The invention relates to a bridge for a laser processing machine and a corresponding laser processing machine having such a bridge.

Laser processing machines are known from the prior art, in which a laser processing unit is moved over the workpiece to process a workpiece using a laser beam. For this purpose, the laser processing unit is attached to a bridge on which the laser processing unit can be moved along a first axis. Furthermore, the bridge itself can be moved along a second axis.

A bridge for a laser cutting machine with a triangular profile is known from US 2017/0361402 A1, wherein a laser processing unit with a laser cutting head provided therein is guided on an obliquely extending side of the profile.

KR 102271355 B1 discloses a bridge for a laser processing machine with a triangular cross-section, wherein a laser processing unit is provided on a vertically extending edge of the cross-section.

CN 110524264 A shows a bridge for a machining gantry, wherein two surfaces on the underside of the bridge are provided for attaching sliding blocks. Different drives can be mounted at two connection points on the bridge.

Document EP 3023190 Al, which forms the basis of the preamble of appended claim 1, discloses a laser cutting machine with a laser cutting unit which can be moved along a bridge in a first direction. The bridge itself is guided on side rails along a second direction which is perpendicular to the first direction.

The object of the invention is to create a bridge for a laser processing machine with an improved construction compared to the prior art.

This object is achieved by the bridge according to Claim 1 and the laser processing machine according to Claim 14. Further developments of the invention are defined in the dependent claims.

The bridge according to the invention is intended for a laser processing machine, with which a corresponding workpiece is processed using a laser beam. In a preferred variant, the laser processing machine is a laser cutting machine, with which the processed workpiece is cut. Nevertheless, the laser processing machine can also be intended for another type of processing, such as laser welding.

The bridge according to the invention comprises a carrier which extends along a first axis and has a receiving side for movably guiding a laser processing unit along the first axis. One or more guide means are provided on the bridge for movably guiding the bridge along a second axis which runs essentially perpendicular to the first axis. Preferably, multiple guide means are provided on the bridge, which are arranged offset from one another along the first axis.

In the bridge according to the invention, each guide means is provided in a separate support component, i.e., there is a separate support component for each guide means. A respective support component is detachably connected to the carrier. Here and in the following, the term "detachable" is to be understood in such a way that the support component and the carrier can be separated from one another without being destroyed. A respective support component has a support surface on which the carrier rests with a contact surface, wherein the support surface runs perpendicular to the receiving side and is inclined at an angle relative to the second axis, so that the support surface, with increasing distance from the receiving side of the bridge, approaches a base of the support component, which faces away from the support surface. The base comprises a base surface for supporting a machine frame on a guide carrier of the laser processing machine. In other words, when the bridge is used as intended in a laser processing machine, the inclined support surface extends with increasing distance from the receiving side towards the base surface or the underside of the support component.

According to the invention, a modular bridge is created consisting of a support and one or more support components, which can be manufactured separately and are only connected to one another when the bridge is assembled. In this way, the manufacture of the bridge can be greatly simplified. In particular, the mechanical processing of surfaces, which is required for the precise alignment of the components of the laser processing machine with one another, is simplified by the modular structure of the bridge. In addition, the inclined support surface results in a shift of the centre of gravity of the laser processing unit provided on the receiving side towards the bridge, thereby achieving a compact design that is optimised in terms of weight distribution. In particular, the weight of the laser processing unit does not overhang far beyond the receiving side.

As defined above, in the bridge according to the invention, the support surface of a respective support component runs perpendicular to the receiving side of the carrier. Since the contact surface of the carrier rests on the support surface, the contact surface also runs perpendicular to the receiving side of the carrier. This rectangular structure simplifies the mechanical processing of the receiving side of the carrier, since simply constructed processing machines can be used for processing the receiving side.

In a particularly preferred embodiment, the bridge according to the invention has two guide means and two support components, wherein the support components are arranged at ends of the carrier which are opposite in the direction of extension of the first axis.

The guide means provided in a corresponding support component can optionally comprise multiple guide elements, such as multiple guide carriages, which are preferably provided offset from one another along the second axis in the support component. The guide means provided for a support component is preferably arranged on the base of the support component, which faces away from the support surface (i.e., on the underside of the support component when the bridge is used as intended in a laser processing machine).

In a further preferred embodiment, one or more open areas are provided in the support surface of the corresponding support component and/or in the contact surface of the carrier, which rests on the support surface, through which a weight saving is achieved.

In a further preferred embodiment, a respective support component comprises a cast body, in particular made of aluminium, wherein the support surface is preferably part of the cast body.

In a further variant, the carrier comprises a body with a plurality of metal sheets connected to one another, wherein the metal sheets are preferably steel sheets. Alternatively, the carrier may comprise a body made of carbon fibre-reinforced plastic.

In a particularly preferred embodiment, the angle of inclination has a value of between 5° to 35°, preferably of between 10° to 30° and particularly preferably of 15°. The angle of inclination is the smallest angle that is enclosed in the cross section perpendicular to the first axis by the support surface and the second axis. The above values of the inclination angle ensure, on the one hand, a sufficient shift of the centre of gravity of the laser processing unit towards the bridge and, on the other hand, a simple assembly of the carrier and support components.

In a further particularly preferred embodiment, a respective support component is detachably connected to the carrier at least on its support surface. This allows a reliable connection to be achieved between the support component and the carrier.

In a further preferred variant, the detachable connection of a respective support component to the carrier is a force-fitting and/or form-fitting connection, wherein the force-fitting and/or form-fitting connection preferably comprises a connection via one or more screws.

In a further preferred embodiment, the support surface of a respective support component and the contact surface of the carrier are detachably connected to one another by means of one or more screws, wherein the screw or screws each extend through superimposed openings in the support surface and the contact surface and are preferably screwed into the support component. This ensures that the carrier is held firmly on the support component.

In a preferred variant of the embodiment just described, the screw or screws comprise at least one screw with a continuous threaded shaft for the force-fitting connection of the support surface and the contact surface. Alternatively or additionally, the screw or screws comprise at least one fitting screw with a cylindrical shaft section for fixing the position of the carrier relative to the respective support component. Exact positioning of the carrier relative to the support component can be ensured by using fitting screws. Fitting screws have the main function of ensuring a form-fitting connection between the carrier and the support component.

In a preferred variant, at least two of the multiple fitting screws are offset from one another in the direction of extension of the first axis and/or in the direction of extension of the second axis. In this way, the position of the carrier on the support component is fixed in multiple spatial directions.

In a further, particularly preferred embodiment, the carrier for a respective support component has one or more support elements which extend perpendicular to the first axis. A respective support element is force-fittingly and/or form-fittingly connected, preferably by means of one or more screws, to the respective support component, preferably on a side surface of the support component that extends perpendicular to the first axis. In a preferred embodiment, each support element is a plate. The connection between the carrier and the support component is improved by means of the support elements. In particular, the support elements can absorb forces acting perpendicular to the support surface.

In a further preferred embodiment, two support elements are provided for a respective support component, which are arranged offset to one another in the direction of extension of the first axis, wherein the respective support component is arranged between the two support elements. This facilitates the positioning of the carrier on the support component when assembling the bridge. Furthermore, the connection between the support component and the carrier is improved.

In a further preferred variant, a projecting section with a guide section running in the direction of the first axis is provided on a side of the carrier facing away from the receiving side for receiving one or more supply components, in particular for receiving an energy chain. Lines for the power supply and control of the laser processing unit and/or a fibre optic cable for supplying laser light to the laser processing unit run in the energy chain. This embodiment enables a compact arrangement of attachments on the bridge.

In a preferred embodiment of the embodiment described above, at least one guide surface of the guide section is inclined relative to the second axis at an angle which has a value of between 5° to 35°, preferably of between 10° to 30° and particularly preferably 15°, wherein the angle preferably has the same value as the angle of inclination of the support surface relative to the second axis. With this embodiment, a reliable guidance of the supply components on the guide section is achieved.

In a further preferred embodiment, the support component, or at least one of the support components, comprises a receptacle for a drive unit for moving the bridge along the second axis. The drive unit can therefore be integrated compactly into the bridge.

In addition to the bridge described above, the invention relates to a laser processing machine, in particular a laser cutting machine, with a laser processing unit and a bridge according to the invention. In a preferred embodiment, the laser processing machine can contain one or more preferred variants of the bridge according to the invention.

Exemplary embodiments of the invention are described in detail below with reference to the accompanying figures.

In the drawings:
- Figs. 1 and 2: show perspective views of a laser processing machine with an embodiment of a bridge according to the invention;
- Fig. 3: shows a side view of the bridge from Fig. 1 and Fig. 2;
- Fig. 4: shows a detailed view of the bridge from Fig. 2; and
- Fig. 5: shows the detailed view according to Fig. 4 with a support element omitted.

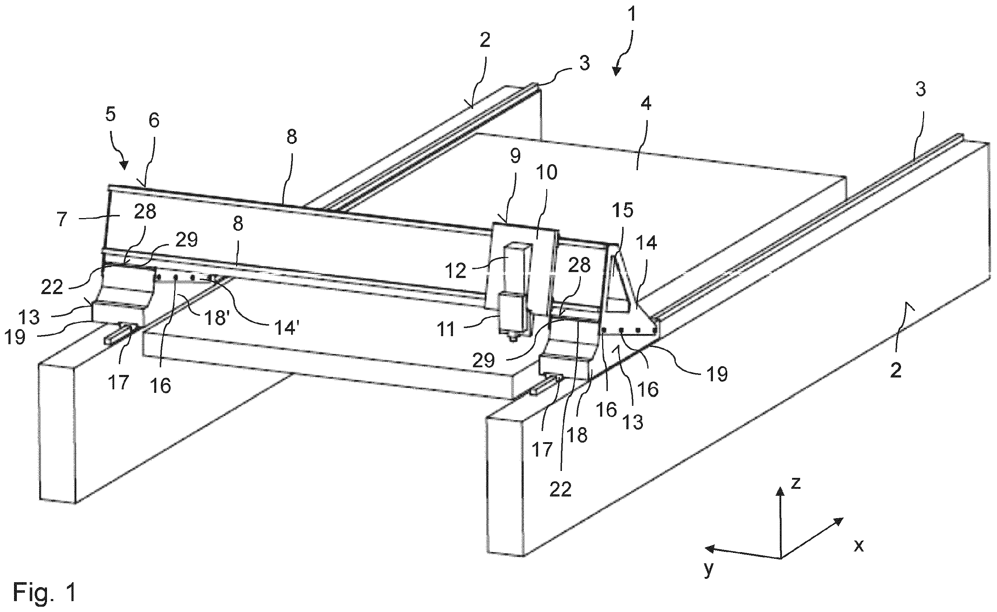

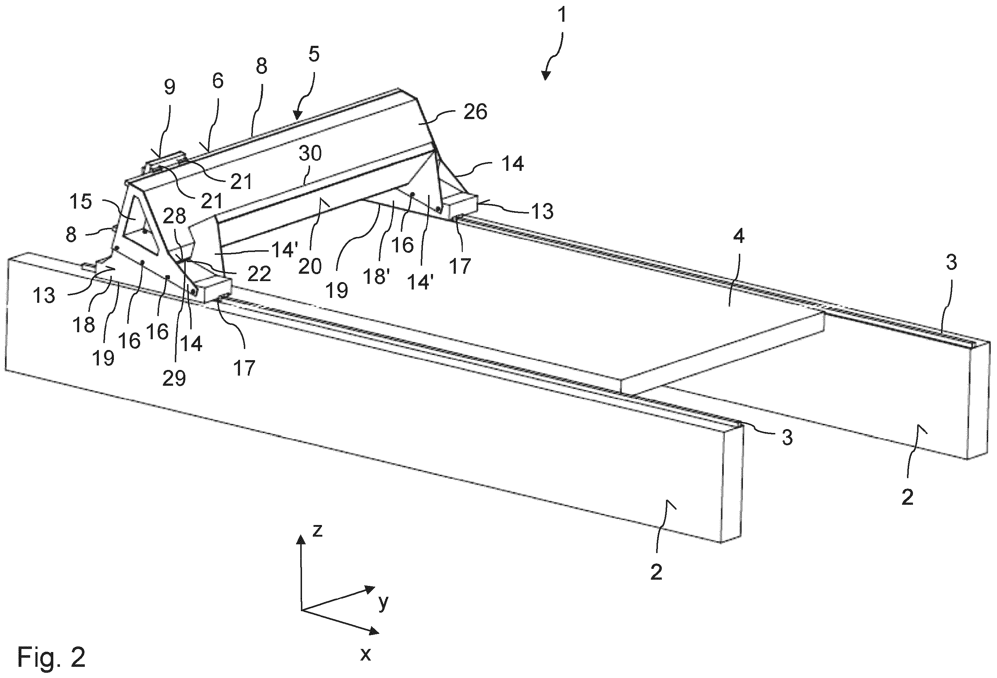

Fig. 1 shows a perspective view from the front of a laser processing machine 1 in the form of a laser cutting machine, which contains an embodiment of a bridge according to the invention. In Fig. 1 and also in the other Figures 2 to 5, a spatial coordinate system is shown to describe the directions of the laser processing machine 1. The x-axis of the coordinate system corresponds to the longitudinal extent of the laser processing machine 1, wherein the laser processing machine is supplied with a workpiece to be processed in the x-direction. The y-axis corresponds to the axis along which the bridge 5 of the laser processing machine 1 explained below extends. The z-axis is the height axis or the vertical axis, wherein the z-direction is the height direction from bottom to top.

The laser processing machine 1 comprises a machine bed that comprises two guide carriers 2 with guide rails 3 located thereon, and a support table 4. The workpiece to be processed lies on the support table 4, which is preferably a metallic workpiece and in particular a metal sheet. Predetermined contours are cut out of the workpiece by means of a laser processing unit 9. The laser processing unit 9 comprises a movable carriage 10, on which a processing head 11 in the form of a laser cutting head is provided. The processing head 11 can be moved in the vertical direction relative to the movable carriage 10 with an actuator 12. When the processing head 11 is in operation, a laser beam emerges downwards from it. This laser beam cuts the workpiece located on the support table 4.

The movable carriage 10 can be moved along the bridge 5 shown and thus along the y-axis by means of an actuator, not shown. This movement moves the laser beam in the y-direction when machining the workpiece. The bridge 5 is guided in the guide rails 3 at its opposite ends in the y-direction and can be moved along the x-axis by means of a drive unit, not shown. This allows the laser beam to be moved in the x-direction when machining the workpiece.

A feature of the bridge 5 shown that is essential to the invention is that it has a modular structure and is composed of a support 6 and two support components 13. The carrier 6 extends between the two guide carriers 2 over the support table 4 and rests on a support surface 22 of a corresponding support component 13 at its opposite ends in the y-direction. The support surface 22 is inclined obliquely downwards relative to the x-axis. In the embodiment described here, the support component 13 comprises a cast body on which the support surface 22 is also formed. In contrast, the carrier 6 is a box made of a large number of sheets connected to one another via welded and screwed connections. Reinforcing ribs (not shown) are provided within the box, thereby increasing the stability of the carrier 6.

The carrier 6 has a receiving side 7 which runs at a right angle to the support surface 22. Consequently, the carrier 6 is inclined by the same angle relative to the z-axis as the support surface 22 is inclined relative to the x-axis. The movable carriage 10 is held on the receiving side 7 and is guided there in two guide rails 8 along the y-axis. Due to the inclination of the receiving side 7, the centre of gravity of the laser processing unit 9 is shifted towards the carrier 6 and a compact structure of the carrier 6 is achieved with the laser processing unit 10 provided thereon.

Each support component 13 has a guide means 17 on its base or underside 19 in order to guide the corresponding support component along one of the guide rails 3. In the embodiment described here, each guide means 17 comprises two guide carriages which are provided along the x-axis at the front and rear ends of the support component 13. In Fig. 1, only the front guide carriages of the guide means 17 of the two support components 13 can be seen. A contact surface 29 is provided on the carrier 6 at its opposite ends in the y-direction, which is inclined corresponding to the support surface 22 and via which the carrier contacts the support surface 22. In the embodiment described here, the contact surface 29 is the underside of a contact sheet 28, which is welded to the carrier 6. Preferably, the support surface 22 and the contact surface 29 have recessed or opened areas, whereby a weight reduction is achieved. The drive unit, not shown, for moving the bridge 5 in the x-direction is preferably integrated in one of the support components 13.

A respective end of the carrier 8 is, among other things, screwed to the corresponding support component 13 via screw connections on the support surface 22, as will be described in more detail below. Furthermore, at each end of the beam, an external support element 14 in the form of a plate and an internal support element 14', also in the form of a plate, are provided. The external support element 14 is screwed to the corresponding support component 13 on its external side surface 18 by means of screws 16. Analogously, the internal support element 14' is screwed to the internal side surface 18' of the support component 13 via screws 16. For reasons of clarity, only some of the screws in Figs. 1 and 2 are designated with the reference number 16. The external support elements 14 contain an opening 15, via which access to the interior of the carrier 6 is made possible in order to screw the carrier to the support surface 22. During operation of the laser processing machine 1, the openings 15 are covered by a cover. The support elements 14 and 14' serve to absorb forces that act in the direction perpendicular to the support surface 22.

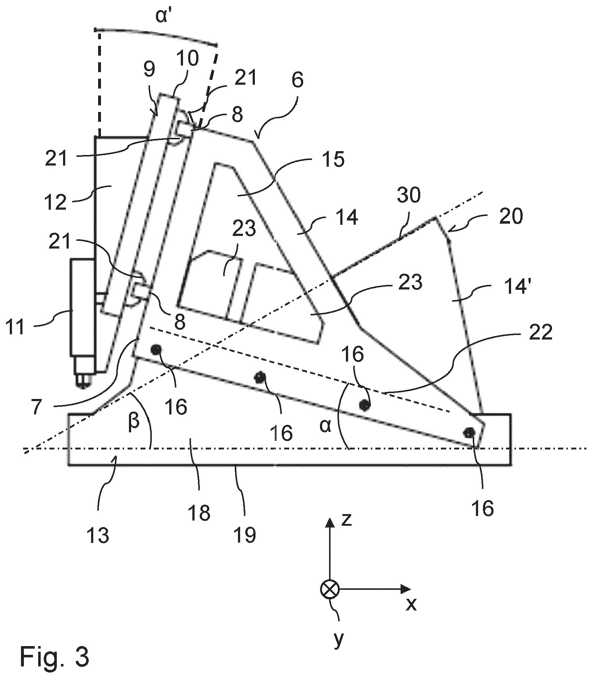

Fig. 2 shows the laser processing machine 1 from Fig. 1 in a perspective view from behind. The rear side 26 of the laser processing machine can be seen from Fig. 2. As can be seen, a projecting section 20 is provided on this rear side, on the top of which there is a guide section 30 with a guide surface which is inclined with respect to the horizontal (i.e., the x-axis). The guide section 30 serves to accommodate an energy chain (not shown), via which lines are guided for supplying energy and controlling the laser processing machine and/or a fibre cable for supplying laser light to the laser processing unit. The projecting section 20 is delimited on its sides by the support elements 14'. From Fig. 2 it can also be seen that the laser processing unit 9 is guided at its upper end via two guide elements 21 on the upper guide rail 8. Two further guide elements 21 (see Fig. 3) are also provided at the lower end of the laser processing unit 9 and engage in the lower guide rail 8 of the carrier 6.

Fig. 3 shows a side view of the bridge 5 from Figs. 1 and 2 along the y-direction of the Cartesian coordinate system. The support component 13 can be seen, which is provided at the left-hand end of the carrier 6 in Fig. 2. The support component at the right end of the carrier has an analogous structure. From Fig. 3, one can see the angle of inclination α at which the support surface 22 is inclined relative to the horizontal (i.e., the x-axis). This angle of inclination α corresponds to the angle of inclination α' shown, in which the receiving side 7 is inclined relative to the vertical (i.e., the z-axis), since the receiving side 7 runs perpendicular to the contact surface 29 and to the support surface 22. In the embodiment described here, the angle of inclination α is 15°, but can also have other values as long as it is ensured that the support surface runs downwards at an angle, so that the focus of the laser processing unit 9 is shifted backwards in relation to the bridge 5. Other values of the inclination angle α can be in the range of between 5° to 35°, in particular in the range of between 10° to 30°. These values apply accordingly to the angle of inclination α'.

From Fig. 3, it can also be seen that the internal support element 14' has openings 23, which saves weight. In addition, the guide section 30 can be seen again, the guide surface of which is inclined at the angle β shown relative to the horizontal (i.e., the x-axis). The energy chain is guided along the guide surface of the guide section 30. Furthermore, the lower guide elements 21 on the movable carriage 10 can be seen from Fig. 3. These guide elements engage in the lower guide rail 8 on the receiving side 7.

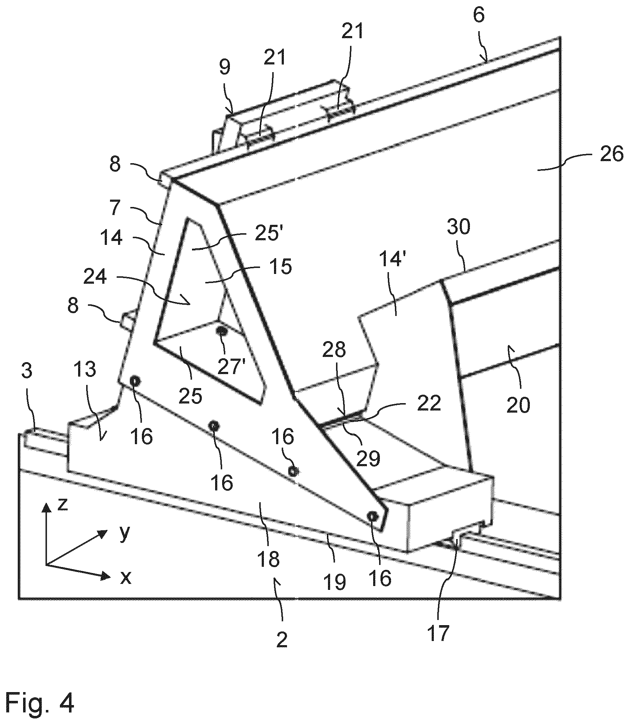

Fig. 4 shows a perspective detailed view of the left-hand end of the bridge 5 from Fig. 2. From Fig. 4, it can be seen that the carrier 6 comprises a metal sheet bent at a right angle with a lower section 25 and an upper section 25'. The lower section 25 runs parallel to the support surface 22. On the underside of the lower section 25, the contact sheet 28 is welded to the corresponding contact surface 29. The contact surface 29 contacts the support surface 22. The receiving side 7 of the carrier 6 is located on the upper section 25' of the bent metal sheet 24. The right-angled arrangement of the two sections 25 and 25' greatly simplifies the mechanical processing of the receiving side 7, which is required in the manufacture of the carrier 6 for the precise alignment of the laser processing unit 9. In particular, processing machines without a rotatable axis can be used for mechanical processing of the receiving side. Such processing machines have significantly lower operating costs than processing machines with rotatable axes.

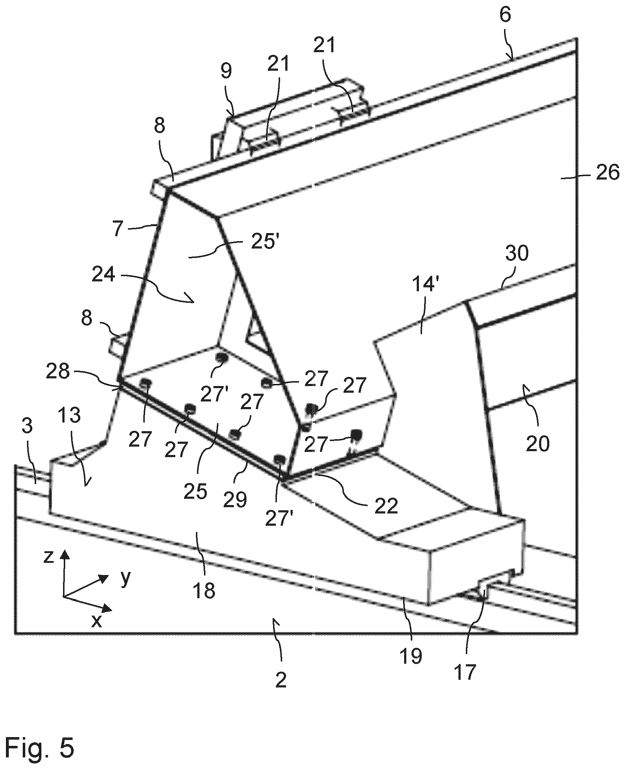

4 also shows a fitting screw 27', with which the lower section 25 of the sheet 24 is fastened to the support surface 22. A total of eight screws are used to connect the lower section 25 to the support surface 22, as can be seen from Fig. 5, described below. Fig. 4 shows the rear guide carriage, which, together with the front guide carriage shown in Figs. 1 and 2, forms the guide means 17 for guiding the corresponding support component 13 along the guide rail 3.

Fig. 5 shows the same view as Fig. 4, but now the external support element 14 screwed to the support component 13 has been omitted. As can be seen, the lower section 25, to the underside of which the contact sheet 28 is welded, is screwed to the support surface 22 using eight screws arranged in two rows. The screws 27 are conventional screws with a continuous threaded shaft, whereby a force-fitting connection between the contact surface 29 and the support surface 22 is achieved. In contrast, the two fitting screws 27', which are offset from one another in both the y-direction and the x-direction, have the function of precisely aligning the carrier 6 with respect to the support component 13. For this purpose, the fitting screws 27' have a highly precisely manufactured cylindrical shaft section in a manner known per se. A form-fitting connection between the contact surface 29 and the support surface 22 is primarily achieved by means of the fitting screws. The screws 27 and 27' are accessible through the opening 15 within the external support element 14 (see Figure 4).

From Fig. 5, it can also be seen that a bent metal shell extends between the upper section 25 and the lower section 25 'of the metal sheet 24, which forms the back 26 of the carrier 6. This shell achieves a compact triangular shape of the carrier.

The embodiments of the invention described in the foregoing provide a number of advantages. In particular, a modularly constructed bridge is provided from two support components and a carrier, which simplifies the manufacture of the bridge. By dividing it into three separate parts, the number of covers per part is reduced and the external shape of the carrier is simplified. This increases process reliability and error tolerance when manufacturing the bridge. The inclined support surface achieves an advantageous weight distribution in such a way that the centre of gravity of the laser processing unit is shifted backwards towards the bridge. At the same time, a firm, detachable connection between the carrier and the support components is ensured via screws.

The vertical alignment of the receiving side in relation to the contact surface and support surface simplifies the processing of the receiving side required in the production of the carrier, since less complex processing machines can be used. In addition, the carrier enables a compact arrangement of attachments thanks to its projecting section.

Furthermore, the drive units for moving the bridge in the x-direction can be attached to the support components. For example, a mechanically unprocessed raw casting can first be produced from the corresponding support component, which is suitable for various drive concepts. The corresponding support component can only be configured for the drive to be used through the subsequent mechanical processing. Furthermore, due to their size, the support components are suitable as heat sinks for the drive unit.

### List of reference signs:

- 1: Laser processing machine
- 2: Guide carriers
- 3: Guide rails
- 4: Support table
- 5: Bridge
- 6: Carrier
- 7: Receiving side of the carrier
- 8: Guide rails
- 9: Laser processing unit
- 10: Movable carriage
- 11: Processing head
- 12: Actuator
- 13: Support component
- 14, 14': Support elements (plates)
- 15: Opening in the support element 14
- 16: Screws
- 17: Guide means (guide carriage)
- 18, 18': Side surfaces of the support component
- 19: Base of the support component facing away from the support surface (underside)
- 20: Projecting section
- 21: Guide element
- 22: Support surface
- 23: Openings in the support element 14'
- 24: Bent metal sheet
- 25: Lower section of the bent metal sheet
- 25': Upper section of the bent metal sheet
- 26: Side of the carrier facing away from the receiving side (rear side)
- 27: Screws with continuous threaded shaft
- 27': Fitting screws with cylindrical shaft section
- 28: Contact sheet
- 29: Contact surface of the contact sheet
- 30: Guide section of the projecting section 20
- α: Angle of inclination of the support surface
- α': Angle of inclination of the receiving side
- β: Angle of the guide surface of the guide section
- x, y, z: Axes of a Cartesian coordinate system

## Claims

1. A bridge for a laser processing machine (1), in particular a laser cutting machine, wherein the bridge (5) comprises a carrier (6) which extends along a first axis (y) and has a receiving side (7) for movably guiding a laser processing unit (9) along the first axis (y), and wherein one or more guide means (17) are provided on the bridge (5) for movably guiding the bridge (5) along a second axis (x), which runs essentially perpendicular to the first axis (y), wherein each guide means (17) is provided in a separate support component (13), **characterised in that** each support component is detachably connected to the carrier (6) and has a support surface (22), on which the carrier (6) rests with a contact surface (29), wherein the support surface (22) runs perpendicular to the receiving side (7) and is inclined at an angle of inclination (α) relative to the second axis (x), so that the support surface (22), with increasing distance from the receiving side (7) of the bridge (5), approaches a base (19) of the support component (13), which faces away from the support surface (22).

2. The bridge according to Claim 1, **characterised in that** the angle of inclination (α) has a value of between 5° to 35°, preferably of between 10° to 30°, and particularly preferably of 15°.

3. The bridge according to Claim 1 or 2, **characterised in that** a respective support component (13) is detachably connected to the carrier (6) at least on its support surface (22).

4. The bridge according to any one of the preceding claims, **characterised in that** the detachable connection of a respective support component (13) to the carrier (6) is a force-fitting and/or form-fitting connection, wherein the force-fitting and/or form-fitting connection preferably comprises a connection via one or more screws (16, 27).

5. The bridge according to any one of the preceding claims, **characterised in that** the support surface (22) of a respective support component (13) and the contact surface (29) of the carrier (6) are detachably connected to one another by means of one or more screws (27, 27 '), wherein the screw (27, 27') or screws (27, 27') each extend through superimposed openings in the support surface (22) and the contact surface (29) and are preferably screwed into the support component (13).

6. The bridge according to Claim 5, **characterised in that** the screw (27, 27') or screws (27, 27') comprise at least one screw (27) with a continuous threaded shaft for the force-fitting connection of the support surface (22) and the contact surface (29) and/or the screw (27, 27') or screws (27, 27') comprise at least one fitting screw (27') with a cylindrical shaft section for fixing the position of the carrier (6) relative to the respective support component (13).

7. The bridge according to Claim 6, **characterised in that** multiple fitting screws (27') are provided, wherein at least two of the multiple fitting screws (27') are arranged offset from one another in the extension direction of the first axis (y) and/or in the extension direction of the second axis (x).

8. The bridge according to any one of the preceding claims, **characterised in that** the carrier (6) for a respective support component (13) has one or more support elements (14, 14') which extend perpendicular to the first axis (y), wherein a respective support element (14, 14') is force-fittingly and/or form-fittingly connected, preferably by means of one or more screws (16), to the respective support component (13), preferably on a side surface (18, 18') of the support component (13) which extends perpendicular to the first axis (y).

9. The bridge according to Claim 8, **characterised in that** two support elements (14, 14') are provided for a respective support component (13), which are arranged offset from one another in the direction of extension of the first axis (y), wherein the respective support component (13) is arranged between the two support elements (14, 14').

10. The bridge according to any one of the preceding claims, **characterised in that**, on a side (26) of the carrier (6) facing away from the receiving side (7), a projecting section (20) is provided which has a guide section (30) extending in the direction of the first axis (y) for receiving one or more supply components, in particular for receiving an energy chain.

11. The bridge according to Claim 10, **characterised in that** at least one guide surface of the guide section (30) which is inclined at an angle (β) with a value of between 5° to 35°, preferably of between 10° to 30° and particularly preferably 15°, relative to the second axis (x).

12. The bridge according to Claim 11, **characterised in that** the angle (β) has the same value as the angle of inclination (α).

13. The bridge according to any one of the preceding claims, **characterised in that** the support component (13), or at least one of the support components (13), comprises a receptacle for a drive unit for moving the bridge (5) along the second axis (x).

14. A laser processing machine, in particular a laser cutting machine, with a laser processing unit (9) and a bridge (5) according to any one of the preceding claims.

## Patentansprüche

1. Brücke für eine Laserbearbeitungsmaschine (1), insbesondere eine Laserschneidmaschine, wobei die Brücke (5) einen Träger (6) umfasst, der sich entlang einer ersten Achse (y) erstreckt und eine Aufnahmeseite (7) zum beweglichen Führen einer Laserbearbeitungseinheit (9) entlang der ersten Achse (y) aufweist und wobei an der Brücke (5) ein oder mehrere Führungsmittel (17) zum beweglichen Führen der Brücke (5) entlang einer zweiten Achse (x) bereitgestellt sind, die im Wesentlichen senkrecht zur ersten Achse (y) verläuft,
wobei jedes Führungsmittel (17) in einem separaten Auflagebauteil (13) bereitgestellt ist, **dadurch gekennzeichnet, dass** jedes Auflagebauteil lösbar mit dem Träger (6) verbunden ist und eine Stützoberfläche (22) aufweist, auf der der Träger (6) mit einer Berührungsoberfläche (29) aufliegt, wobei die Stützoberfläche (22) senkrecht zur Aufnahmeseite (7) verläuft und um einen Neigungswinkel (α) gegenüber der zweiten Achse (x) geneigt ist, sodass sich die Stützoberfläche (22) mit zunehmender Entfernung von der Aufnahmeseite (7) der Brücke (5) einem der Stützoberfläche (22) abgewandten Unterteil (19) des Auflagebauteils (13) nähert.

2. Brücke nach Anspruch 1, **dadurch gekennzeichnet, dass** der Neigungswinkel (α) einen Wert zwischen 5° und 35°, vorzugsweise zwischen 10° und 30° und besonders bevorzugt von 15° aufweist.

3. Brücke nach Anspruch 1 oder 2, **dadurch gekennzeichnet, dass** ein jeweiliges Auflagebauteil (13) mindestens an ihrer Stützoberfläche (22) lösbar mit dem Träger (6) verbunden ist.

4. Brücke nach einem der vorhergehenden Ansprüche, **dadurch gekennzeichnet, dass** die lösbare Verbindung eines jeweiligen Auflagebauteils (13) mit dem Träger (6) eine kraft- und/oder formschlüssige Verbindung ist, wobei die kraft- und/oder formschlüssige Verbindung vorzugsweise eine Verbindung über eine oder mehrere Schrauben (16, 27) umfasst.

5. Brücke nach einem der vorhergehenden Ansprüche, **dadurch gekennzeichnet, dass** die Stützoberfläche (22) eines jeweiligen Auflagebauteils (13) und die Berührungsoberfläche (29) des Trägers (6) durch eine oder mehrere Schrauben (27, 27') lösbar miteinander verbunden sind, wobei die Schraube (27, 27') bzw. Schrauben (27, 27') sich jeweils durch übereinanderliegende Öffnungen in der Stützoberfläche (22) und der Berührungsoberfläche (29) erstrecken und vorzugsweise in das Auflagebauteil (13) eingeschraubt sind.

6. Brücke nach Anspruch 5, **dadurch gekennzeichnet, dass** die Schraube (27, 27') bzw. die Schrauben (27, 27') mindestens eine Schraube (27) mit einem durchgehenden Gewindeschaft zur kraftschlüssigen Verbindung der Stützoberfläche (22) und der Berührungsoberfläche (29) umfassen und/oder die Schraube (27, 27') bzw. die Schrauben (27, 27') mindestens eine Passschraube (27') mit einem zylindrischen Schaftabschnitt zum Fixieren der Position des Trägers (6) im Verhältnis zum jeweiligen Auflagebauteil (13) umfassen.

7. Brücke nach Anspruch 6, **dadurch gekennzeichnet, dass** mehrere Passschrauben (27') bereitgestellt sind, wobei mindestens zwei der mehreren Passschrauben (27') in Erstreckungsrichtung der ersten Achse (y) und/oder in Erstreckungsrichtung der zweiten Achse (x) versetzt zueinander angeordnet sind.

8. Brücke nach einem der vorhergehenden Ansprüche, **dadurch gekennzeichnet, dass** der Träger (6) für ein jeweiliges Auflagebauteil (13) ein oder mehrere Stützelemente (14, 14') aufweist, die sich senkrecht zur ersten Achse (y) erstrecken, wobei ein jeweiliges Stützelement (14, 14') kraft- und/oder formschlüssig, vorzugsweise durch eine oder mehrere Schrauben (16), mit dem jeweiligen Auflagebauteil (13) verbunden ist, vorzugsweise an einer Seitenoberfläche (18, 18') des Auflagebauteils (13), die sich senkrecht zur ersten Achse (y) erstreckt.

9. Brücke nach Anspruch 8, **dadurch gekennzeichnet, dass** für ein jeweiliges Auflagebauteil (13) zwei Stützelemente (14, 14') bereitgestellt sind, die in Erstreckungsrichtung der ersten Achse (y) versetzt zueinander angeordnet sind, wobei das jeweilige Auflagebauteil (13) zwischen den beiden Stützelementen (14, 14') angeordnet ist.

10. Brücke nach einem der vorhergehenden Ansprüche, **dadurch gekennzeichnet, dass** auf einer der Aufnahmeseite (7) abgewandten Seite (26) des Trägers (6) ein vorspringender Abschnitt (20) bereitgestellt ist, der einen sich in Richtung der ersten Achse (y) erstreckenden Führungsabschnitt (30) zum Aufnehmen einer oder mehrerer Versorgungskomponenten aufweist, insbesondere zum Aufnehmen einer Energieführungskette.

11. Brücke nach Anspruch 10, **dadurch gekennzeichnet, dass** mindestens eine Führungsoberfläche des Führungsabschnitts (30) in einem Winkel (β) mit einem Wert zwischen 5° und 35°, vorzugsweise zwischen 10° und 30° und besonders bevorzugt 15°, gegenüber der zweiten Achse (x) geneigt ist.

12. Brücke nach Anspruch 11, **dadurch gekennzeichnet, dass** der Winkel (β) den gleichen Wert wie der Neigungswinkel (α) aufweist.

13. Brücke nach einem der vorhergehenden Ansprüche, **dadurch gekennzeichnet, dass** das Auflagebauteil (13) oder mindestens eines der Auflagebauteile (13) eine Aufnahme für eine Antriebseinheit zum Bewegen der Brücke (5) entlang der zweiten Achse (x) aufweist.

14. Laserbearbeitungsmaschine, insbesondere eine Laserschneidmaschine, mit einer Laserbearbeitungseinheit (9) und einer Brücke (5) nach einem der vorhergehenden Ansprüche.

## Revendications

1. Pont pour une machine d'usinage au laser (1), notamment pour une machine de découpe laser, le pont (5) comprenant un appui (6) s'étendant le long d'un premier axe (y) et présentant un côté de réception (7) permettant de guider de manière mobile une unité d'usinage au laser (9) le long du premier axe (y), et dans lequel un ou plusieurs moyens de guidage (17) sont disposés sur le pont (5) permettant de guider de manière mobile le pont (5) le long d'un second axe (x), qui s'étend essentiellement perpendiculairement au premier axe (y),
dans lequel chaque moyen de guidage (17) est disposé dans un composant de support (13) séparé, **caractérisé en ce que** chaque composant de support est relié de manière amovible à l'appui (6) et comporte une surface de support (22), sur laquelle l'appui (6) repose avec une surface de contact (29), dans lequel la surface de support (22) s'étend perpendiculairement au côté de réception (7) et est inclinée en formant un angle d'inclinaison (α) par rapport au second axe (x), de sorte que la surface de support (22), à mesure que la distance par rapport au côté de réception (7) du pont (5) augmente, se rapproche d'une base (19) du composant de support (13), qui est tournée à l'opposé de la surface de support (22).

2. Pont selon la revendication 1, **caractérisé en ce que** l'angle d'inclinaison (α) a une valeur comprise entre 5° et 35°, de préférence entre 10° et 30°, et en particulier de préférence de 15°.

3. Pont selon la revendication 1 ou 2, **caractérisé en ce qu'**un composant de support (13) respectif est relié de manière amovible à l'appui (6) au moins sur sa surface de support (22).

4. Pont selon l'une quelconque des revendications précédentes, **caractérisé en ce que** la liaison amovible d'un composant de support (13) respectif à l'appui (6) est une liaison par ajustement à force et/ou à complémentarité de forme, dans lequel la liaison à force et/ou à complémentarité de forme comprend de préférence une liaison par l'intermédiaire d'une ou plusieurs vis (16, 27).

5. Pont selon l'une quelconque des revendications précédentes, **caractérisé en ce que** la surface de support (22) d'un composant de support (13) respectif et la surface de contact (29) de l'appui (6) sont reliées l'une à l'autre de manière amovible au moyen d'une ou plusieurs vis (27, 27'), dans lequel la vis (27, 27') ou les vis (27, 27') traversent chacune des ouvertures superposées dans la surface de support (22) et la surface de contact (29) et sont de préférence vissées dans le composant de support (13).

6. Pont selon la revendication 5, **caractérisé en ce que** la vis (27, 27') ou les vis (27, 27') comprennent au moins une vis (27) avec une tige filetée continue pour la liaison par ajustement à force de la surface de support (22) et de la surface de contact (29) et/ou la vis (27, 27') ou les vis (27, 27') comprennent au moins une vis d'ajustement (27') avec une section de tige cylindrique pour fixer la position de l'appui (6) par rapport au composant de support (13) respectif.

7. Pont selon la revendication 6, **caractérisé en ce qu'**il est prévu de multiples vis d'ajustement (27'), dans lequel au moins deux des multiples vis d'ajustement (27') sont disposées de manière décalée l'une par rapport à l'autre dans la direction d'extension du premier axe (y) et/ou dans la direction d'extension du second axe (x).

8. Pont selon l'une quelconque des revendications précédentes, **caractérisé en ce que** l'appui (6) pour un composant de support (13) respectif comporte un ou plusieurs éléments de support (14, 14') qui s'étendent perpendiculairement au premier axe (y), dans lequel un élément de support (14, 14') respectif est relié par ajustement à force et/ou par complémentarité de forme, de préférence au moyen d'une ou plusieurs vis (16), au composant de support (13) respectif, de préférence sur une surface latérale (18, 18') du composant de support (13) qui s'étend perpendiculairement au premier axe (y).

9. Pont selon la revendication 8, **caractérisé en ce qu'**il est prévu deux éléments de support (14, 14') pour un composant de support (13) respectif, lesquels sont disposés de manière décalée l'un par rapport à l'autre dans la direction d'extension du premier axe (y), dans lequel le composant de support (13) respectif est disposé entre les deux éléments de support (14, 14').

10. Pont selon l'une quelconque des revendications précédentes, **caractérisé en ce que**, sur un côté (26) de l'appui (6) tourné à l'opposé du côté de réception (7), est disposée une section en saillie (20) qui présente une section de guidage (30) s'étendant dans la direction du premier axe (y) pour recevoir un ou plusieurs composants d'alimentation, en particulier pour recevoir une chaîne porte-câbles.

11. Pont selon la revendication 10, **caractérisé en ce qu'**au moins une surface de guidage de la section de guidage (30) est inclinée et forme un angle (β) d'une valeur comprise entre 5° et 35°, de préférence entre 10° et 30° et en particulier de préférence de 15°, par rapport au second axe (x).

12. Pont selon la revendication 11, **caractérisé en ce que** l'angle (β) a la même valeur que l'angle d'inclinaison (α).

13. Pont selon l'une quelconque des revendications précédentes, **caractérisé en ce que** le composant de support (13), ou au moins l'un des composants de support (13), comprend un logement pour une unité d'entraînement permettant de déplacer le pont (5) le long du second axe (x).

14. Machine d'usinage au laser, en particulier machine de découpe laser, équipée d'une unité d'usinage au laser (9) et d'un pont (5) selon l'une quelconque des revendications précédentes.
